# EUROPÄISCHE PATENTANMELDUNG

(11) **EP 1 118 710 A2**
(43) Veröffentlichungstag der Anmeldung: **25.07.2001**
(21) Anmeldenummer: 01100605.3
(22) Anmeldetag: 10.01.2001
(51) Int. Cl.: D21H 27/26

(54) **Durchscheinende kunstharzgebundene Schichtstoffplatte**

(30) Priorität: 12.01.2000 DE 10001584
(71) Anmelder: DEKODUR GmbH & Co. KG, 69434 Hirschhorn/Neckar (DE)
(72) Erfinder: André, Volkmar Reinhart, 69434 Hirschhorn/Neckar (DE)
(74) Vertreter: Mutzbauer, Helmut, Dr.

(57) **Zusammenfassung**

Eine mindestens auf einer Teilfläche durchscheinende und evt. teilweise mit einer Metallschicht überzogene dekorative Schichtstoffplatte, wie sie erhalten wird durch Verpressen unter Druck und in der Wärme von
- mehreren Lagen eines mit einem vorzugsweise farblosen, duroplastisch aushärtenden Harz getränkten bzw. gebundenen Papiers P,
- gegebenenfalls einer oder mehreren Lagen eines melaminharzgebundenen, als Dekorträger dienenden Papierkörpers D,
- gegebenenfalls mindestens einer Lage eines zellulosehaltigen, melaminharzgebundenen Overlaypapiers O,
- gegebenenfalls einer Kleberschicht K,
- gegebenenfalls einer mit der Kleberschicht deckungsgleichen durchbrochenen Metallfolie M,
- gegebenenfalls einer mit der Metallfolie M deckungsgleichen Schutzschicht S,
wobei außer dem Grundkörper P mindestens eine der Schichten D und/oder O und/oder M vorhanden ist und weiter die gegebenenfalls vorhandene Kleberschicht K, Metallfolie M und Schutzschicht S den Schichtstoffkörper nur teilweise überdecken.

## Beschreibung

Kunstharzgebundene Schichtstoffplatten sind seit langem bekannt. Zu ihrer Herstellung werden mehrere Lagen eines mit einem Kunstharz getränkten Trägers aus zellulosehaltigem Material - in der Regel Papier oder ein anderes verfilztes oder gewebtes Zellulosematerial - im Stapel unter Druck und Wärme miteinander zu einem Grundkörper verpresst und ausgehärtet. Auch anorganische Träger wie Glas- oder Mineralfasern oder synthetische Fasermaterialien können für Spezialzwecke verwendet werden. Als Kunstharz für diesen Grundkörper wird aus wirtschaftlichen Gründen gewöhnlich ein Phenol-Formaldehyd-Kondensat ("Phenolharz") eingesetzt, jedoch sind rein technisch auch andere duroplastisch aushärtbare Formaldehyd-Kondensate wie Melamin- oder Harnstoffharze geeignet.

Dekorative Schichtstoffplatten weisen über dem Grundkörper eine Dekorschicht auf. Die Dekorschicht besteht aus einem ebenfalls harzgetränkten, eventuell pigmentierten Träger, gewöhnlich ebenfalls Papier, das entweder durch die Pigmentierung allein wirkt oder zusätzlich bedruckt ist und mit dem harzgetränkten Grundkörper in einem Zug in einer beheizbaren Presse, d.h. unter Druck- und Wärmeeinwirkung durch gemeinsames Aushärten verbunden wird. Als Bindemittel für die Dekorschicht wählt man i.a. nicht das gewöhnlich rotbraun gefärbte Phenolharz, sondern ein helles, nach Möglichkeit farbloses Kunstharz. Außer den gelegentlich verwendeten härtbaren (vernetzbaren) Acrylharzen werden für die Dekorschicht wegen der angestrebten Haltbarkeit vor allem duroplastisch härtbare, d.h. vernetzende Melamin-Formaldehyd-Kondensate ("Melaminharze") oder doch unter Mitverwendung von Melamin hergestellte Kondensate verwendet. Z.B. können Harnstoffharze bzw. Melamin-Harnstoff-Mischharze verwendet werden; die Beständigkeit gegen äußere Einflüsse hängt u.a. vom Melaminanteil ab. Über der Dekorschicht können weitere Schichten angeordnet werden, zur Verbesserung der Verschleißfestigkeit beispielsweise Deckschichten aus transluzentem Material, sog. Overlays. Hierfür werden in der Regel reine Zellulosepapiere verwendet.

Bekannt ist auch, über der Dekorschicht oder über der Deckschicht noch eine Metallfolie aufzubringen, die in diesem Fall die Dekorschicht nur teilweise überdeckt und an den freien Stellen den dekorativen Untergrund sichtbar lässt.

Die bekannten dekorativen Schichtstoffplatten sind jedoch unabhängig davon, ob eine Metallfolie aufgeklebt ist oder nicht, in jedem Fall opak (undurchsichtig), vor allem wegen der üblichen Trägerschicht aus phenolharzgetränkten Papieren und ferner, weil es üblich ist, für die Dekorschicht pigmentierte Papiere einzusetzen. Auch dünne Schichtstoffplatten des bekannten Typs lassen keinerlei Licht durch.

Dekorative Schichtstoffplatten werden für viele Zwecke im Innen- und Außenbereich verwendet. Gegenwärtig dienen sie jedoch praktisch ausschließlich zur Gestaltung von Oberflächen von Gebrauchsgegenständen wie Möbeln oder Flächen im Innenbereich von Gebäuden (Wandflächen, Fußböden).

Zur Herstellung von durchscheinenden Flächen, z.B. Wandschirmen, Lampenschirmen, Trennwänden in sanitären Anlagen, Beleuchtungsflächen, die künstliches oder natürliches Licht diffus durchlassen, auch z.B. Oberlichtern, werden praktisch ausschließlich Flachmaterialien aus thermoplastischen Kunststoffen, wie strukturiertem Polyacrylat, Polystyrol, Polycarbonat oder auch duroplastisch ausgehärteten Kunstharzen wie Polyester verwendet. Diese werden aus technischen Gründen allerdings in der Regel einschichtig aufgebaut, was herstellbedingt ist, nicht mehrschichtig, wie dies bei Schichtstoffplatten üblich ist, d.h. mit einem Papierträger auf Zellulosebasis. Das liegt bei thermoplastischen Harzen vor allem daran, dass damit kein Papier getränkt werden kann. Natürlich sind neben Platten aus Kunststoff, d.h. organischen Materialien im weitesten Sinne auch Platten aus entsprechend strukturiertem Mineralglas gebräuchlich. Die Herstellung von durchscheinenden Materialien ist natürlich nur sinnvoll, wenn das Licht gerade nicht vollständig durchgelassen werden soll (Transparenz - in diesem Fall würde man trägerfreie anorganische oder organische Gläser verwenden), sondern wenn rade keine vollständige Durchsichtigkeit vorhanden ist, wie z.B. im Sanitärbereich.

Es ist eine Aufgabe der Erfindung, durchscheinende (transluzente) Schichtstoffplatten zu schaffen, deren Oberfläche wahlweise auch teilweise mit einer Metallfolie überzogen ist, und die neben verschiedenen Oberflächeneffekten (z.B. Dekorpartien neben Metallpartien) außerdem in den Teilflächen, die eine Kunststoffoberfläche aufweisen, transluzent sind. Abgesehen von der ästhetischen Wirkung haben transluzente, teilweise metallbeschichtete Schichtstoffplatten den Vorteil, dass damit absichtlich eine stellenweise Verminderung des Lichtdurchtritts erzielt werden kann, beispielsweise in heißen Ländern während der hellsten Tageszeiten, sodass die Metallflächen Licht- und Wärmestrahlung reflektieren können.

Überraschenderweise können mit farblosen Formaldehyd-Kondensaten, d.h. insbesondere mit Melaminharzen und geeigneten Zellulosepapieren relativ dicke Schichten aufgebaut werden (z.B. mit einer Stärke von 2 mm oder mehr, die hoch transluzent sind, ohne dass man zu anderen Werkstoffkombinationen übergehen muß.

Die Erfindung hat sich zum Ziel gesetzt, einen vorgefertigten, kunstharzgebundenen, aus einem mehrlagigen, mit einem hellen, transluzenten Kunstharz getränkten Schichtstoff zu schaffen, der genügend eigenstabil ist, um ohne Tragekörper auszukommen und der bei Bedarf auch zunächst unvollständig ausgehärtet der Presse entnommen und später nachverformt werden kann.

Eine erfindungsgemäße, mindestens teilweise durchscheinende und gegebenenfalls teilweise mit einer Metallschicht überzogene dekorative Schichtstoffplatte besteht gemäß der beigegebenen Figur und in der Reihenfolge ihrer Aufbauelemente mindestens aus
- gegebenenfalls einem ein- oder mehrlagigen, melaminharzgebundenen, als Dekorträger dienenden Papierkörper D, der ebenfalls auf Zellulosebasis aufgebaut sein sollte;
- gegebenenfalls einer mindestens einlagigen zellulosehaltigen, vorzugsweise melaminharzgebundenen Deckschicht (Overlay) O;
- gegebenenfalls einer Kleberschicht K,
- gegebenenfalls einer mit der Kleberschicht deckungsgleichen Metallfolie M,
- gegebenenfalls einer mit der Metallfolie M deckungsgleichen Schutzschicht S, mit der Maßgabe, dass außer dem Grundkörper P mindestens eine der Schichten D und/oder O und/oder M bzw. K bzw. S vorhanden ist und weiter mit der Maßgabe, dass die gegebenenfalls vorhandene Kleberschicht K, die gegebenenfalls vorhandene Metallfolie M und gegebenenfalls die Schutzschicht S den Schichtstoffkörper nur teilweise überdecken und in den harzgebundenen Dekorträger D sowie - bei entsprechender Dicke der Metallfolie - ggf. auch in die oberste Schicht des Grundkörpers P eingepresst sind, so dass ihre Oberfläche mit der restlichen, nicht überdeckten Oberfläche im wesentlichen bündig abschließt.

Es ist überraschend, dass auch relativ dicke erfindungsgemäße Schichtstoffplatten - z.B. in einer Stärke von 2 mm oder mehr - an den Stellen, an denen nicht metallbeschichtet sind, weitgehend transluzent sind. Solche relativ dicken Schichtstoffplatten können ohne weiteres aus 10, 20 oder mehr harzgetränkten Schichten aufgebaut sein. Die Zahl der Schichten ist nur durch wirtschaftliche Erwägungen, nicht aber technisch begrenzt.

Auf den Flächenanteil und die Form der Metalloberfläche im Verhältnis zur Dekor(d.h. Kunststoff-)Oberfläche kommt es dabei nicht an, d.h. das Flächenverhältnis und die Form wird lediglich durch ästhetische, nicht durch technische Gründe bestimmt und kann demnach beliebige Werte annehmen; z.B können zwischen 0 und 99 Prozent der Oberfläche Metall und entsprechend 100 bis 1 Prozent der Oberfläche Kunststoff sein. Vorzugsweise beträgt das Flächenverhältnis 10 bis 90 bzw. 90 bis 10 Prozent und besonders bevorzugt 30 bis 70 bzw. 70 bis 30 Prozent. Am häufigsten sind Metallfolien zu verwenden, die Durchbrechungen in regelmäßiger Anordnung aufweisen, z.B. mehr oder minder große ausgestanzte oder quadratische Durchbrechungen und jedes beliebige andere Muster handeln, wobei der Phantasie praktisch keine Grenzen gesetzt sind. Geeignete Metallfolien mit unterschiedlichen Lochmustern sind im Handel und die Sortimente werden noch ständig erweitert.

Zum Aufbau einer erfindungsgemäßen Schichtstoffplatte ist im einzelnen das Folgende zu sagen:

Als Papiere zum Aufbau eines transluzenten Grundkörpers P eignen sich füllstofffreie reine Zellulosepapiere, vorzugsweise solche aus alpha-Zellulose, d.h. nicht regenerierter, nativer Zellulose. Da Zellulose einen ähnlichen Brechungsindex wie ein Melaminharz aufweist, wird bevorzugt ein mit Melaminharz getränktes Zellulosepapier verwendet; im übrigen ist der Begriff "Papier" hier im weitesten Sinne gemeint - es können auch andere, geeignete Träger wie Vliesstoffe (sog. non-woven fabrics), Gewebe o.ä. z.B. auch aus Glasfasern verwendet werden. Als Zellulosematerial zur Herstellung von tränkbaren Papieren sind Sorten aus der Holzverarbeitung ebenso geeignet wie Zellulose auf der Grundlage von Baumwolle oder anderen pflanzlichen Fasern. Geeignete Papiere können z.B. ein Flächengewicht von 20 bis 60 g/m² haben. Zur Herstellung des Grundkörpers P sind sie zweckmäßig mit etwa 100 bis 150 % (Harzgewicht trocken, bezogen auf Papiergewicht) Harz getränkt. Man kann im Handel erhältliche fertig getränkte Papiere verwenden, die als Overlaypapiere angeboten werden und i.d.R. mit etwa 200 % beharzt sind. Wegen des relativ hohen Harzgehalts dieser fertigen Papiere kann man u.U. unbeharzte Papiere lagenweise mitverwenden, sodass sich am ausgehärteten Grundkörper P ein Harzanteil von z.B. 75 bis 150 % einstellt. Zur Herstellung des Grundkörpers P werden i.a. 5 bis 30 Lagen des Papiers benötigt, je nach gewünschter Stärke, die z.B. 0,1 bis 2 mm betragen kann, wobei die Gesamtstärke der Schichtstoffplatte z.B. 0,2 bis 3 mm beträgt.

Über dem Grundkörper P befindet sich vorzugsweise eine Dekorschicht D und/oder eine Overlayschicht O, die zwecks Erhalts der Transluzenz ebenfalls aus einem mit einem hellfarbigen Harz getränkten Zellulosepapier aufgebaut sind. Die Papierträger für die Dekorschicht und das Overlay sind üblicherweise reine z.B. Seidengewebe, wenn die Gewebestruktur zum dekorativen Effekt beitragen soll. Es ist überraschend, dass trotzdem relativ hohe Presstemperaturen von bis zu 180°C angewendet werden können. Wenn Papier verwendet wird, kann es von der gleichen Qualität sein wie das zum Aufbau des Grundkörpers verwendete. Wenn das Dekor aus einer pigmentfreien Einfärbung oder einer Einfärbung und einem Muster bestehen soll, können mehrere Dekorpapiere übereinander verwendet werden. I.d.R. wird man allerdings nur ein Dekorpapier verwenden, z.B. ein mit einem Muster bedrucktes gegebenenfalls mit einem löslichen Farbstoff eingefärbtes, also nicht pigmentiertes Papier.

Wenn über dem Dekorpapier noch ein Overlaypapier, d.h. mindestens eine Lage einer zellulosehaltigen, ebenfalls harzgebundenen, im wesentlichen transluzenten Deckschicht aufgebracht wird, erhält man eine besonders haltbare und farbintensive Dekoroberfläche, wobei ersichtlich die Metallfolie M, falls vorhanden, nicht direkt in den Dekorträger D, sondern zunächst in das Overlay O eingepresst ist. Das verwendete Papier kann von der gleichen Qualität sein wie das zum Aufbau des Grundkörpers verwendete. Der Beharzungsgrad des Overlaypapiers kann höher sein als der eines Papiers, wie es zum Aufbau des Grundkörpers verwendet wird. Z.B. können Papiere mit einem Beharzungsgrad von 200 bis 400 % eingesetzt werden (trocken, bezogen auf Papiergewicht wie oben).

Wenn eine Metallfolie mitverwendet wird, ist somit entscheidend, daß das Metall in die Dekorschicht D, gegebenenfalls das Overlay O, evt. auch noch in den Grundkörper P eingepresst ist, wobei es in der Regel mit der Oberfläche von D bzw. O annähernd bündig abschließt. Die Grenze zwischen der Metalloberfläche und der Kunststoffoberfläche soll vollständig geschlossen sein und in der Regel keinen treppenartigen Übergang aufweisen. Dies kann zwar in besonderen Fällen erwünscht sein (z.B. wenn die Metallfolie besonders dick ist), jedoch soll auch in diesem Fall die Metallfolie als mustergemäß wesentliches Merkmal in die Kunstharzoberfläche eingepresst sein. Eine weitere Möglichkeit, die die Vielseitigkeit der mustergemäßen Schichtstoffplatte unterstreicht, ist die Möglichkeit, mehrere Metallfolien unterschiedlicher Oberflächenstruktur, die unterschiedlich durchbrochen sind, übereinander anzuordnen, sodass sie insgesamt noch einen Teil der Herstellung in der Regel das Vorhandensein von Passmarken auf den Metalloberflächen, damit sich ein regelmäßiges Muster ergibt.

Als Metallfolien eignen sich Folien oder dünne Bleche praktisch aller für dekorative Zwecke in Betracht kommenden Metalle, z.B. solche aus Kupfer, Aluminium, Eisen oder deren Legierungen, wie Messing oder Edelstahl. Sie können metallisch blank oder, je nach der dekorativen Absicht, auch matt, galvanisch mit anderen Metallen überzogen oder sonstwie oberflächlich verändert sein. Je nach der Art des verwendeten Metalls kann es vorteilhaft oder sogar notwendig sein, die Metallfolie mit einer Schutzschicht auszustatten. Bei Aluminium kann dies beispielsweise die durch anodische Oxidation erhältliche Oxidschicht sein. Es kann zweckmäßig sein, von vorneherein oberflächenbehandelte Metallfolien zu verwenden, die außerdem ihrerseits ein dekoratives Muster tragen (z.B. bedruckt sein) können oder eine sonstwie bearbeitete - z.B. geschliffene, gebürstete oder geätzte - Oberfläche besitzen. Ferner kann die gesamte Oberfläche der Schichtstoffplatte, also sowohl die Metallteile wie die Kunststoffteile, nachträglich mit einer Deckschicht, Schutzschicht o.ä. überzogen werden.

Die erfindungsgemäße, teilweise transluzente Schichtstoffplatte kann darüber hinaus auf ihrer Unterseite mit einer - zweckmäßig wärmereaktiven - Kleberschicht versehen und so in den Handel gebracht werden, so dass sie vom Verwender unmittelbar auf einen ebenfalls transluzenten Tragekörper - z.B. eine Platte aus Acrylharz aufgebracht und durch Erwärmen damit verbunden werden kann.

Der erfindungsgemäße Aufbau kann entsprechend den beigegebenen Abbildungen leicht dadurch festgestellt werden, daß man den betreffenden Formkörper senkrecht zur Oberfläche schneidet, ggf. anschleift und den Schichtaufbau bei entsprechender Vergrößerung z.B. mit einer Lupe betrachtet.

Die Transluzenz der erfindungsgemäßen Schichtstoffplatte beträgt je nach Stärke z.B. 80 bis 20 %, wobei natürlich dünnere Platten i.a. eine höhere Transluzenz aufweisen. Zur Messung der Transluzenz kann ein handelsübliches Meßgerät gang besitzt oder einen Messstrahlengang, der eichfähig ist, d.h. einen Leerwert festzustellen erlaubt.

Zur Herstellung einer erfindungsgemäßen teilweise transluzenten Schichtstoffplatte ist im einzelnen das folgende zu sagen:

Als Harz für die Herstellung des Grundkörpers ist vor allem Melaminharz, d.h. ein Melamin-Formaldehyd-Vorkondensat geeignet, das wie bereits erwähnt, günstige optische Eigenschaften aufweist und in der Wärme unter Vernetzung aushärtet. Geeignet sind aber auch andere duroplastisch härtbare Harze wie Harnstoffharze (wenn es auf z.B. Witterungsbeständigkeit weniger ankommt), Epoxidharze oder wärmevernetzbare Acrylharze.

Diese Harze sind handelsüblich und ihre Verarbeitung ist in der Fachliteratur oder den Druckschriften der Hersteller beschrieben. Ferner sind vorgefertigte harzgetränkte Papiere sowohl zur Herstellung des Grundkörpers wie der Dekor- und der Overlayschicht im Handel, wie bereits erwähnt.

Zur Verklebung der Metallfolie mit der Kunststoffoberfläche können unterschiedliche Mittel verwendet werden; z.B. können Schmelzkleber (thermoplastisch verarbeitbare Kleber auf der Grundlage z.B. von Vinylpolymerisaten) oder duroplastisch aushärtbare (wärmereaktive) Kleber eingesetzt werden, die eine ausreichende Affinität zur Metalloberfläche aufweisen (z.B. handelsübliche Metallkleber). Auch diese Klebstoffe sind weitgehend handelsüblich. Es sind auch fertige verklebungsfähige, d.h. mit einem Kleber beschichtete Metallfolien im Handel.

Die Verarbeitung der Rohstoffe zur mustergemäßen Schichtstoffplatte geschieht üblicherweise in Ein- oder Mehretagenpressen. Vorzugsweise werden Einetagenpressen verwendet, wenn die Platte vor dem Entnehmen nicht rückgekühlt werden muß. Die Härtungsdauer richtet sich nach der Preßtemperatur und u.U. danach, ob die Aushärtung unvollständig sein soll (Nachverformbarkeit). Der Preßdruck kann z.B. zwischen 10 und 200 bar betragen, was auch von der Leistungsfähigkeit der Presse abhängt und nicht erfindungsspezifisch ist. Die Preßnischen Gründen kann es zweckmäßig sein, während des Härtungsvorgangs die Temperatur und/oder den Druck abnehmen oder ansteigen zu lassen. In jedem Fall muß darauf geachtet werden, daß der Härtungsvorgang rechtzeitig unterbrochen wird, wenn die Nachverformbarkeit der Platte erhalten bleiben soll. Wegen der unterschiedlichen Reaktivität der handelsüblichen Harze läßt sich ein allgemeiner Zeitbedarf für die Aushärtung nicht angeben; ggf. ist die beste Härtezeit durch einen Vorversuch zu ermitteln.

### Beispiel

Zur Ermittlung der Transluzenz wurde eine erfindungsgemäße Schichtstoffplatte von 2 mm Stärke hergestellt. Dies geschah durch Verpressen von 25 Lagen eines Zellulosepapiers mit einem Papiergewicht von 40 g/m², das gewöhnlich als Overlay verwendet wird und für diesen Fall (zur Bildung eines Grundkörpers) mit 140 % eines handelsüblichen Melamin-Formaldehyd-Tränkharzes beharzt war, sowie einer Lage eines mit 250 % beharzten Overlaypapiers in seiner ursprünglichen Funktion als Overlaypapier.

Bei Beleuchtung der Schichtstoffplatte mit einer Standard-Lichtquelle, die eine Beleuchtungsstärke von 1740 Lux auf der Oberfläche erzielt, wird die Beleuchtungsstärke auf einem unmittelbar unter dem Schichtstoff angeordneten weißen Schirm mit 380 Lux ermittelt. Dies entspricht einer Lichtdurchlässigkeit von 28,8 %, die vom Auge subjektiv als hoch beurteilt wird.

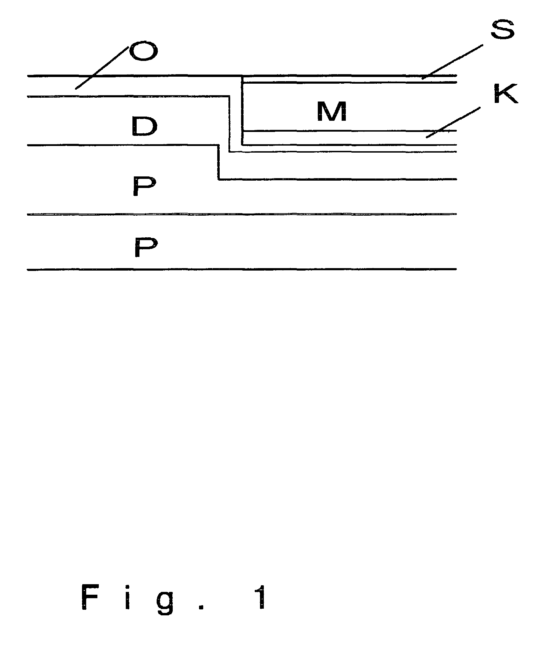

## Patentansprüche

1. Mindestens auf einer Teilfläche durchscheinende, gegebenenfalls teilweise mit einer Metallschicht überzogene dekorative Schichtstoffplatte, bestehend mindestens aus
- einem mindestens drei Lagen eines mit einem transluzenten und vorzugsweise farblosen, duroplastisch aushärtenden Harz getränkten bzw. gebundenen Papiers aufweisenden Grundkörper P,
- gegebenenfalls einem ein- oder mehrlagigen, vorzugsweise melaminharzgebundenen, als Dekorträger dienenden Papierkörper D,
- gegebenenfalls einer mindestens einlagigen zellulosehaltigen, vorzugsweise melaminharzgebundenen Deckschicht (Overlay) O,
- gegebenenfalls einer Kleberschicht K,
- gegebenenfalls einer mit der Kleberschicht deckungsgleichen durchbrochenen Metallfolie M,
- gegebenenfalls einer mit der Metallfolie M deckungsgleichen Schutzschicht S,
mit der Maßgabe, dass außer dem Grundkörper P mindestens eine der Schichten D und/oder O und/oder M vorhanden ist und weiter mit der Maßgabe, dass die gegebenenfalls vorhandene Kleberschicht K, Metallfolie M und Schutzschicht S den Schichtstoffkörper nur teilweise überdekken und in den harzgebundenen Dekorträger D sowie - bei entsprechender Dicke der Metallfolie - gegebenenfalls auch in die oberste Schicht des Grundkörpers P eingepreßt sind, sodass ihre Oberfläche mit der restlichen, nicht überdeckten Oberfläche im wesentlichen bündig abschließt.

2. Schichtstoffplatte nach Anspruch 1, dadurch gekennzeichnet, daß der Grundkörper P aufgebaut ist aus mindestens drei Lagen eines mit einem Melaminharz getränkten bzw. gebundenen Papiers auf der Grundlage von füllstofffreier alpha-Zellulose.

3. Schichtstoffplatte nach Anspruch 1, dadurch gekennzeichnet, dass alle verwendeten Papiere füllstofffreie Zellulosepapiere auf der Grundlage von alpha-Zellulose sind.

4. Schichtstoffplatte nach Anspruch 1, wie sie erhalten wird, wenn man mindestens drei Lagen eines mit einem transluzenten und vorzugsweise farblosen, duroplastisch aushärtenden Harz getränkten bzw. gebundenen Papiers aus alpha-Zellulose, gegebenenfalls mindestens einer Lage eines melaminharzgetränkten Dekorpapiers D auf der Grundlage eines unpigmentierten Zellulosepapiers, gegebenenfalls mindestens einer Lage eines melaminharzgetränkten Overlaypapiers O sowie gegebenenfalls einer mit einem Kleber versehenen durchbrochenen Metallfolie M in einer heizbaren Plattenpresse bei einer Temperatur von mindestens 100°C und einem Druck von mindestens 10 bar i.W. bis zur Aushärtung des bzw. der Harze verpreßt, wobei mindestens eine der Lagen D, O und/oder M vorhanden ist.
